Europäisches Patentamt

European Patent Office

Office européen des brevets

(11) Publication number: 0 261 360
A2

## (12) EUROPEAN PATENT APPLICATION

(21) Application number: 87111324.7

(22) Date of filing: 05.08.87

(51) Int. Cl.4: A01G 27/00

(30) Priority: 18.08.86 IT 3316986 U

(43) Date of publication of application:
30.03.88 Bulletin 88/13

(84) Designated Contracting States:
ES FR GB GR

(71) Applicant: Simoncelli, Giancarlo
Via Kennedy, 57
I-61027 Pesaro(IT)

(72) Inventor: Simoncelli, Giancarlo
Via Kennedy, 57
I-61027 Pesaro(IT)

(74) Representative: Dr. Ing. A. Racheli & C.
Viale San Michele del Carso, 4
I-20144 Milano(IT)

(54) Humidifier device for plant pots.

(57) A humidifier device for plant pots consists of a body a portion (1) of which serves as a container while another lower portion (6) has a pointed appendix (3), with slits or holes, suitable for sticking into the soil to be humidified; the portion (1) serving as a container is separate from the pointed appendix (3), a wick (5) being provided to connect said portions (1) to said point (3).

FIG.1

EP 0 261 360 A2

## "HUMIDIFIER DEVICE FOR PLANT POTS"

The present invention concerns a humidifier device for plant pots.

House plants require constant care and in some cases it is difficult to achieve the correct humidification. Pot-holders with a reservoir have already been devised for this purpose; these envisage that the water be absorbed by the soil contained in the pot by a capillary action through a wick immersed in the reservoir and partially buried in the soil in the bottom of the pot. With this type of pot-holder the water, since it flows from the bottom upwards, is mixed with putrefying organic substances that are harmful for the plant.

There also exist centralized distributors consisting of a tank equipped with tubes leading to the pots to be humidified. In these distributors the water flows downwards, by falling or by means of a small circulating pump. Known devices of this type are however relatively complex and cumbersome.

The aim of the invention is to create a simple, low-cost device capable of humidifying plants efficiently, making them absorb clean water coming from above.

The above aim has been achieved with a device consisting of a body a portion of which serves as a container, while another lower portion is equipped with at least one pointed appendix, with slits or holes, suitable to be stuck into the soil to be humidified, said portion serving as a container separate from said pointed appendix, there being envisaged, inside the body, a whick that connects the inside of the container to said pointed appendix.

The device according to the invention is used by filling the container with water and sticking the distributing pointed appendix into the soil to be humidified; the water is conveyed to the distributing pointed appendix by capillarity by means of the wick, the water flow adapting to the rate of absorption of the plant roots.

The device according to the invention can have a plurality of distributing pointed appendixes and thus a plurality of wicks (one for each appendix) guided by ducts inside the container.

The container is preferably graduated to show the amount of water inside, the device thus being able to act as a distributor, for example for fertilizer.

The device according to the invention offers the advantage of allowing clean water to flow downwards from above without using cumbersome piping.

An example of a device according to the invention is illustrated in the accompanying drawings, in which:

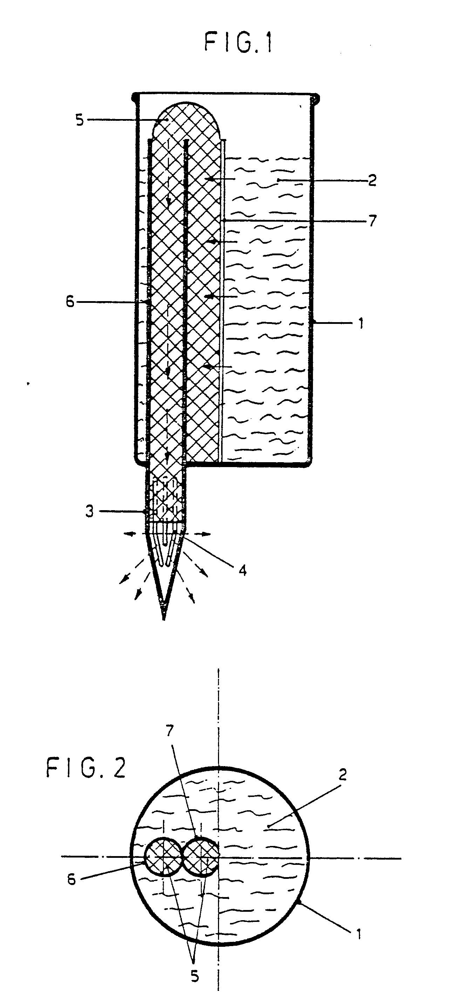

Fig. 1 shows a longitudinal section of a humidifier for plant pots;

Fig. 2 shows a cross-section of the humidifier in figure 1.

The attached figures show a humidifier device consisting of a body that has a substantially cylindrical portion 1 that serves as a container and a portion 6 equipped with an appendix underneath, shaped as a point 3 and having holes or slots 4. Inside the container 1, a cylindrical duct 7, set alongside the portion 6, houses a wick 5 that crosses the portion 6 to reach the point 3. The duct 7 has a longitudinal slit in the area diametrally opposite that adjacent to portion 6.

The humidifier device illustrated is filled with water, indicated by 2 in the figures, and placed to rest vertically on a pot with the point 3 stuck into the soil to be humidified. Through the slit in the duct 7, the water 2 impregnates the wick 5 and flows, by capillarity, in the direction shown by the hatched arrows in the figure (i.e. up to the outlet from the holes 4) through the effect of absorption by the plant roots.

In this way the soil maintains the correct humidity for a long time without any manual intervention.

For large pots a plurality of devices can be used in series or a device with a plurality of distributor points.

### Claims

1. A humidifier device for plant pots, capable of causing the plants to absorb water from above, characterized in that it consists of a body a portion (7) of which serves as a container, while another lower portion (6) is equipped with a pointed appendix (3), with slits or holes, suitable to be stuck into the soil that is to be humidified, said portion (7) that serves as a container being separate from said pointed appendix (3), a wick (5) being provided to connect said portion (1) and said point (3).

2. A device according to claim 1, characterized in that, inside the container (1) a duct with slits or holes is provided to house part of the wick (5).

3. A device according to claim 1 or 2, characterized in that it has a plurality of distributing pointed appendixes (3) and a plurality of wicks (5).

4. A device according to claim 1, 2 or 3, characterized in that the container (1) has a substantially cylindrical shape.

5. A device according to any one of the preceding claims, characterized in that the container (1) has a series of graduations to show the amount of fluid inside.

FIG.1

FIG. 2